# DEMANDE DE BREVET EUROPEEN

(11) **EP 0 748 969 A1**
(43) Date de publication de la demande: **18.12.1996**
(21) Numéro de dépôt: 96401285.0
(22) Date de dépôt: 13.06.1996
(51) Int. Cl.: F16K 5/04

(54) **Robinet à boisseau tournant cylindrique**

(30) Priorité: 15.06.1995 FR 9507133
(71) Demandeur: LEGRIS S.A., F-35000 Rennes (FR)
(72) Inventeur: Serot, Pierre, 92260 Fontenay aux Roses (FR); Guivarc'H, Olivier, 35360 Landujan (FR)
(74) Mandataire: Robert, Jean-Pierre

(57) **Abrégé**

Robinet à tournant (10) cylindrique comprenant:
- un corps (1) pourvu d'un passage interne (2) et d'un logement cylindrique (5)
- le tournant (10) présentant une surface extérieure cylindrique logée à faible jeu dans le logement cylindrique (5) et présentant un conduit interne (11)
- des moyens d'étanchéité prévus entre la surface cylindrique du tournant (10) et la surface cylindrique du logement (5),
dans lequel ces moyens d'étanchéité comprennent un joint d'étanchéité (18) en forme d'anneau logé dans une gorge (19) de l'une des surfaces cylindriques, dont le tracé fermé autour de l'axe (6) de la surface est tel que dans la position de fermeture de l'organe d'obturation (10) après une rotation d'un quart de tour, l'un des orifices (8, 9) internes du passage est isolé du conduit interne (11) par le joint (18) qui forme une barrière continue entre eux au niveau des surfaces cylindriques du logement et du tournant.

## Description

La présente invention concerne un robinet à boisseau tournant cylindrique, communément appelé à tournant cylindrique.

De façon connue, un tel robinet comprend :
- un corps pourvu d'un passage interne aboutissant à deux orifices, généralement opposés, équipés de moyens de raccordement du corps à une canalisation,
- un organe d'obturation du passage réalisé sous forme d'une pièce cylindrique montée à rotation dans un logement cylindrique du corps qui coupe le passage, cette pièce possédant un conduit interne qui, dans une première position de la pièce, assure la continuité du passage dans le corps entre les deux orifices et, dans une seconde position, interrompt cette continuité,
- des moyens d'étanchéité placés entre le corps et l'organe d'obturation, destinés d'une part à isoler le passage et le conduit de l'extérieur et d'autre part à isoler les orifices l'un de l'autre lorsque le passage est fermé par l'organe d'obturation.

Le passage du tournant de l'une à l'autre de ses positions est réalisé par pivotement autour de son axe. La manoeuvre en rotation de l'obturateur est permise par une excroissance axiale du tournant hors du corps à laquelle est associé un moyen d'entraînement manuel (poignée) ou mécanisé.

Généralement les moyens assurant l'étanchéité des conduits internes du corps à l'égard de l'extérieur sont constitués par un ou deux joints toriques disposés entre le tournant et le logement qui le reçoit, dans un plan perpendiculaire à l'axe de pivotement du tournant. Les moyens pour isoler de manière étanche un orifice par rapport à l'autre sont disposés, lorsque le robinet est fermé, autour du débouché, dans le logement du tournant, de l'orifice qui est situé en aval par rapport au sens d'écoulement du fluide lorsque le robinet est ouvert. Il s'agit ici aussi, dans la plupart des cas, de joints toriques qui sont logés dans des gorges ménagées soit dans la surface cylindrique du logement bordant ce débouché, soit dans la surface cylindrique du tournant qui est placée en regard des bords de ce débouché lorsque bien entendu le robinet est fermé. Dans le cas de robinets bi-direction-nels, deux joints opposés sont installés soit autour du débouché des deux orifices dans le logement soit sur la paroi extérieure du tournant.

La qualité de ces robinets est dépendante en grande partie de la tenue des joints assurant l'étanchéité décrite en second ci-dessus, qui travaillent dans des conditions difficiles. En effet, portés par le tournant, lors du pivotement de ce dernier ils glissent sur les arêtes du débouché de l'orifice correspondant ou, fixes autour de ces débouchés, ils glissent sur les arêtes du conduit interne au tournant débouchant à la surface cylindrique extérieure de ce dernier. Avec l'effet de la pression du fluide et la circulation de ce dernier, il existe une tendance importante à déloger ces joints de leur gorge dans leur partie découverte pouvant conduire à un pincement bloquant le tournant ou, pour le moins, une détérioration rapide du joint à cet endroit. Ainsi l'étanchéité disparaît rapidement et le robinet "fuit" dans son état fermé.

En outre le montage notamment automatisé de ces joints n'est pas aisé car il convient de les contraindre à garder une forme "cylindrique" puisque les gorges qui les accueillent sont ménagées dans de telles surfaces cylindriques avant l'introduction du boisseau dans son logement.

Par la présente invention, il est proposé une solution à ce problème d'étanchéité interne grâce à laquelle le montage du robinet est facilité et sa longévité augmentée.

A cet effet l'invention a donc pour objet un robinet à tournant cylindrique comprenant :
- un corps pourvu d'un passage interne débouchant hors du corps par deux orifices externes et d'un logement cylindrique d'axe coupant le passage interne et dans lequel ce passage débouche par au moins deux orifices internes dont au moins un est situé sur la surface cylindrique du logement.
- un organe d'obturation présentant une surface extérieure cylindrique, logé à faible jeu dans le logement cylindrique et présentant un conduit interne terminé par au moins deux débouchés dont au moins un est situé sur la surface extérieure cylindrique, l'organe d'obturation étant mobile en pivotement sur au moins un quart de tour autour de l'axe de la surface cylindrique entre une première position où au moins le débouché de la surface cylindrique de l'organe d'obturation est en face de l'orifice interne situé sur la surface cylindrique du corps et une seconde position où ce débouché est décalé angulairement par rapport à cet orifice,
- des moyens d'étanchéité prévus entre la surface cylindrique du tournant et la surface cylindrique du logement, comprenant un joint d'étanchéité en forme d'anneau logé dans une gorge de la surface cylindrique du logement, dont le tracé est fermé autour de l'axe de cette surface.

Selon une caractéristique principale de l'invention, dans la seconde position du tournant le joint définit une barrière continue entre l'un des orifices situé sur la surface cylindrique du logement et le conduit interne du tournant, au niveau des surfaces cylindriques du logement et du tournant.

Le premier intérêt de cette disposition de joint conforme à l'invention réside dans le fait que ce joint entoure le tournant si bien que sa forme annulaire naturelle est à peu près respectée. Il est donc beaucoup plus simple de le maintenir dans un état déformé le long d'une surface cylindrique qu'il entoure plutôt que de le maintenir déformé contre une surface cylindrique qu'il ne recouvre que partiellement, comme c'est le cas dans l'art antérieur. Il s'ensuit que la mise en place et le montage automatique de ce joint dans un robinet à tournant cylindrique sont facilités.

De manière avantageuse, la section de la gorge est en U dont l'une des ailes est formée par un épaulement de la surface cylindrique du logement et dont l'autre aile est formée par la surface terminale, de tracé conjugué à celui de l'épaulement, d'une chemise rapportée dans ce logement, l'organe d'obturation formant l'un des éléments vis/écrou d'un boulon de serrage de la chemise en direction de l'épaulement de la surface cylindrique du logement.

On comprend que cette chemise qui est un manchon tubulaire dont une extrémité de forme appropriée joue un rôle semblable à celui d'un poinçon à l'égard d'une matrice qui serait l'épaulement ménagé dans le logement du tournant pour maintenir déformé contre cet épaulement le joint qui néanmoins entoure complètement l'axe de la surface cylindrique.

Dans une variante de réalisation concernant un robinet droit, le conduit interne de l'organe d'obturation présente un autre débouché sur sa surface extérieure cylindrique. Dans une variante de réalisation concernant un robinet coudé, l'organe d'obturation formant l'écrou du boulon susdit, la vis est creuse et est logée dans un autre débouché du conduit interne ménagé dans l'organe d'obturation, ce débouché étant coaxial à l'axe de pivotement de l'organe d'obturation.

D'autres caractéristiques et avantages ressortiront de la description donnée ci-après de plusieurs variantes de réalisation d'un robinet selon l'invention.

Il sera fait référence aux dessins annexés parmi lesquels :
- la figure 1 est une vue en coupe d'un premier robinet selon l'invention,
- la figure 2 est une vue extérieure de la chemise mise en oeuvre dans la figure 1,
- la figure 3 est un schéma illustrant la disposition du joint dans un robinet du type de celui de la figure 1,
- la figure 4 est une vue en coupe d'une première variante de réalisation du robinet de la figure 1,
- la figure 5 est une vue en coupe perpendiculaire à l'axe du tournant d'une seconde variante du robinet de la figure 1,
- la figure 6 est une vue en coupe d'un second robinet conforme à l'invention.

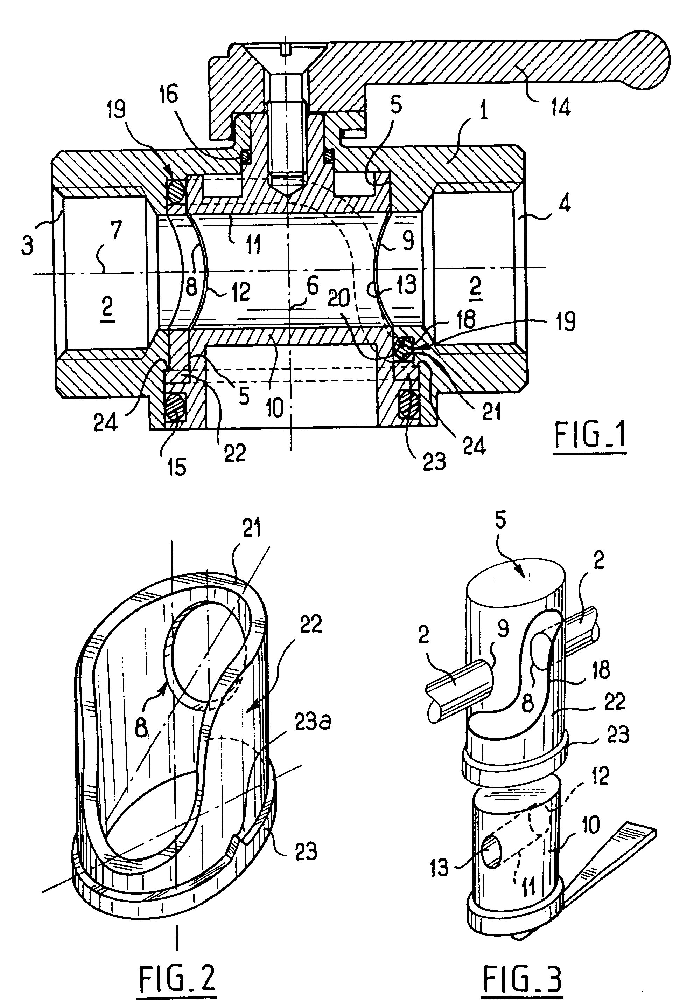

A la figure 1, on a représenté un robinet à tournant cylindrique qui comporte un corps 1 pourvu d'un passage interne 2, débouchant à l'extérieur du corps 1 par deux orifices externes opposés 3 et 4. Le corps 1 est également pourvu d'un logement central cylindrique 5 dont l'axe 6 est, dans le cas de figure perpendiculaire à l'axe 7 de ce passage 2. Le logement 5 est donc sécant de ce passage qui débouche dans le logement par deux orifices internes 8 et 9.

Dans le logement cylindrique 5, le robinet comporte un tournant cylindrique 10 qui comporte un conduit interne 11 dont on a référencé 12 et 13 les débouchés à la surface cylindrique externe de ce tournant. En outre ce tournant cylindrique 10 possède une excroissance axiale à laquelle, dans le cas de figure est attelée une poignée 14 de manoeuvre de son pivotement à l'intérieur du corps 1.

L'étanchéité du montage du tournant 10 dans le corps 1 est assurée par deux joints toriques 15 et 16, le logement cylindrique qui accommode ce tournant dans le corps étant dans cette réalisation étagé et traversant totalement le corps. L'immobilisation axiale du tournant par rapport au corps est assurée par les moyens de liaison de la poignée 14 au tournant 10, de manière connue.

Le robinet selon l'invention comporte également des moyens d'étanchéité qui permettent d'isoler de manière sûre l'orifice 3 de l'orifice 4 lorsque le robinet est fermé.

Aux figures 1, 2 et 3 les moyens d'étanchéité sont constitués par un joint 18 qui, à l'état libre est annulaire et de section circulaire. Ce joint est logé dans une rainure ménagée en creux dans la surface cylindrique du logement 5 cette rainure portant la référence 19 et étant de section en forme de U.

Cette rainure est continue dans la paroi du logement cylindrique 5 et ménagée de manière à entourer complètement l'axe 6 de ce logement. Pour illustrer la forme de la rainure et donc du joint lorsqu'il y est logé, on se référera à la figure 3 où le cylindre supérieur symbolise la surface cylindrique du logement 5 du corps 1 dans lequel débouche par les ouvertures internes 8 et 9 le passage 2. La rainure, donc le joint 18, divise la surface du logement cylindrique 5 en deux parties, l'ouverture 8 appartenant à une partie, par exemple celle située sous le joint, tandis que l'ouverture 9 appartient à la partie située au-dessus du joint.

A cette figure 3 on a également représenté en-dessous du logement cylindrique 5 le tournant 10 avec son conduit intérieur 11 et les débouchés 12 et 13 de ce conduit à la surface cylindrique du tournant 10. Ce tournant est représenté à l'extérieur du logement 5 mais on comprend que, lorsqu'il est logé dans ce logement, les débouchés 12 et 13 du conduit 11 peuvent être situés respectivement en regard des orifices 9 et 8 ou décalés, par exemple de 90°, par rapport à ces orifices. Lorsqu'ils sont en regard des orifices le robinet est ouvert et lorsqu'ils sont décalés à 90° le robinet est fermé. C'est dans ce dernier état que l'étanchéité entre l'orifice 8 et l'orifice 9 doit être assurée. Pour que cette étanchéité existe il faut non seulement que, comme dit plus haut, les orifices 8 et 9 soient situés de part et d'autre du joint 18, mais également que les débouchés 12 et 13, alors que le conduit 11 est orthogonal au passage 2, soient dans une zone unique de la surface 5. En effet, dans le cas contraire, le passage 11 constituerait un pont entre les deux zones supérieure et inférieure de la surface du logement 5, et une occasion pour le fluide de passer entre les orifices 8 et 9. C'est pourquoi le joint 18 affecte une forme qui contourne les débouchés 12 et 13 du conduit 11 lorsque ce dernier est perpendiculaire au passage 2 de manière que les débouchés 12 et 13 et l'orifice interne 9 appartiennent à la même zone (supérieure) de la surface du logement 5.

Le maintien du joint 18 dans la gorge ou rainure 19, ainsi que sa mise en place dans cette gorge, sont facilités si cette gorge 19 est en fait formée entre un épaulement 20 porté par le corps 1 du logement 5 et l'extrémité 21 d'une chemise 22 dont la surface intérieure forme la partie inférieure de la surface du logement 5 telle qu'elle a été définie plus haut en relation avec la forme du joint 18. Cette chemise porte à sa base une collerette 23 qui constitue un appui de la chemise sur le corps 1 par l'intermédiaire d'un épaulement 24 maintenant sa surface d'extrémité 21 à une distance constante de l'épaulement 20. La rainure 19 en forme de U a donc ses deux ailes constituées d'une part par l'épaulement 20 et d'autre part par la surface terminale 21 de la chemise 22. Pour faciliter le montage et l'emprisonnement du joint entre ces deux surfaces 20 et 21, on aura pu prévoir entre le corps 1 et la chemise 22 à l'endroit par exemple de la collerette 23 des moyens d'indexation angulaire de la chemise 22 par rapport au corps 1 (par exemple un ergot 23a). Cette indexation a également pour effet de lier en rotation la chemise et le corps de sorte que le frottement engendré par la rotation du boisseau cylindrique ne puisse pas déplacer la chemise par rapport au corps et contraindre le joint de manière déséquilibrée.

On aura noté que la chemise 22 possède un orifice qui se place dans le passage 2 et dont le débouché sur sa surface interne constitue en fait l'orifice interne 8 du passage 2.

Dans ce mode de réalisation, la section de la gorge est en U. Il n'est pas impossible de prévoir une gorge de section trapézoïdale ou plus généralement adaptée à la section du joint qu'elle doit accommoder. Ce joint peut d'ailleurs être de toute section appropriée (carrée, rectangulaire, trapézoïdale...) à la qualité de l'étanchéité requise.

On comprend, au vu de la figure 1, que l'assemblage des différents constituants du robinet est extrêmement simple. Il suffit en effet, de placer dans le corps 1 sur l'épaulement 20 le joint 18 puis d'introduire la chemise 22 qui viendra contraindre sans comprimer le joint entre la surface 20 et la surface 21 de cette chemise puis d'introduire le tournant 10 pourvu de son joint torique 15, le joint torique 16 ayant pu être préalablement mis en place dans le corps 1, et enfin d'atteler la poignée 14 au tournant pour maintenir le tout assemblé. Ce montage peut être très facilement automatisé.

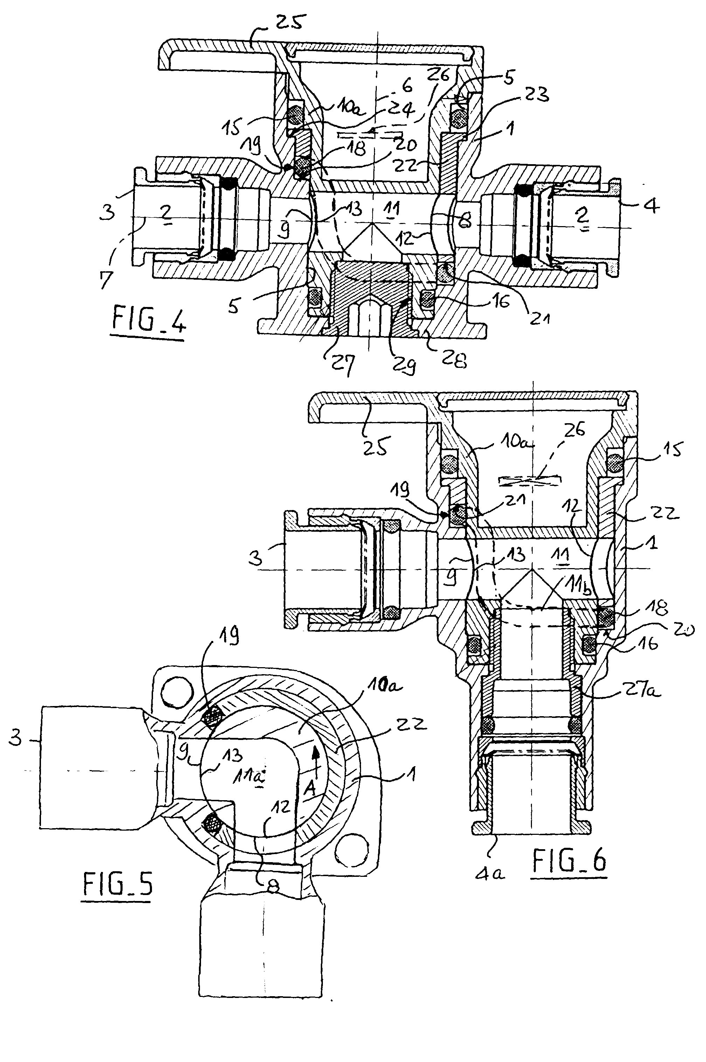

A la figure 4, la variante de réalisation représentée concerne également un robinet droit qui se distingue du robinet décrit précédemment par l'agencement de ses différents- composants. Les éléments de cette variante semblables à ceux des figures précédentes portent les mêmes références. Alors que dans l'exemple de réalisation précédent, la poignée 14 était rapportée sur le tournant 10 par une vis, à la figure 4 cette poignée 25 est en une seule pièce avec le tournant 10a du côté du joint torique 15 le plus grand. Par ailleurs la chemise 22 est calée en rotation dans le logement 5 par un méplat (ou deux) 26 de sa collerette 23 qui coopère avec un méplat en correspondance du logement 5.

Le tournant 10a forme dans cette réalisation l'écrou d'un boulon dont la vis 27 traverse une paroi de fond 28 du corps 1 où elle s'appuie par sa tête de manoeuvre pourvue par exemple d'un logement polygonal pour une clé de manoeuvre. Le serrage de la vis plaque la collerette 23 contre l'épaulement 24 ce qui définit la distance séparant les surfaces 20 et 21 donc la largeur de la gorge 19 donc la compression du joint 18 dans celle-ci. Les filets de la vis 27 et de l'orifice taraudé 29 correspondant dans le tournant 10a peuvent être collés pour rendre définitive la liaison vis/écrou. On aura noté que l'orifice taraudé 29 du tournant 10a débouche dans le conduit interne 11 dont les débouchés 12 et 13 sont sur la surface extérieure cylindrique du tournant.

La figure 5 illustre par une vue en coupe transversale à l'axe du tournant 10a une variante de réalisation du robinet selon la figure 4 dans laquelle le robinet a des entrées sorties à 90° l'une de l'autre. On y retrouve certains des éléments déjà décrits avec les mêmes références. Le conduit 11a interne du tournant présente un coude et ses débouchés 12 et 13 sont décalés de 90° sur la surface cylindrique du tournant (au lieu de 180° sur la figure précédente). Les orifices 8 et 9 le sont également sur la surface du logement 5. Une rotation de 90° dans le sens A du tournant place le débouché 13 en face de l'orifice 8 et, comme dans le cas précédent, le joint 18 forme une barrière continue entre l'orifice 9 situé sur la surface 5 et le conduit interne 11, 11a lorsque le tournant est tourné d'un quart de tour c'est-à-dire dans sa position de fermeture du robinet (dans le cas de la figure 1, c'est entre l'orifice 8 et le conduit 11 que la barrière se situe).

Enfin à la figure 6, le robinet représenté est un robinet coudé, c'est-à-dire que le corps 1a de celui-ci présente un passage interne qui débouche hors du corps par un orifice 3 latéral et un orifice 4a coaxial au tournant 10a (d'axe 6). Le conduit interne 11 présente dans ce cas une dérivation 11b qui débouche en direction de l'orifice 4a. Cette dérivation n'est en fait autre que l'orifice taraudé 29 décrit précédemment. Le logement 5 du corps est identique à celui de la figure 4 de manière à recevoir un tournant 10a, un joint 18 et une chemise 22 identiques à décrits en regard de cette figure 4. La vis de fixation 27a du tournant 10a est ici creuse puisque le canal interne au robinet la traverse pour déboucher à l'extérieur en 4a. En rapprochant les figures 4 et 6, on comprend l'un des intérêts de l'invention qui permet une standardisation poussée de la fabrication en conservant pour deux corps différents un même tournant. Quand, à partir de l'état ouvert du robinet représenté à la figure 6, on fait tourner l'obturateur de 90°, le joint 18 forme une barrière continue qui isole complètement l'orifice 9 situé sur la surface cylindrique du logement 5 du conduit interne 11, 11b du tournant, même si celui-ci comporte un autre débouché 12 sur la surface cylindrique opposée au débouché 13.

## Revendications

1. Robinet à tournant (10) cylindrique comprenant:
- un corps (1) pourvu d'un passage interne (2) débouchant hors du corps par deux orifices (3, 4) externes et d'un logement cylindrique (5) d'axe (6) coupant le passage interne (2) et dans lequel ce passage débouche par au moins deux orifices internes (7,8) dont au moins un est situé sur la surface cylindrique du logement (5).
- un organe d'obturation (10, 10a) présentant une surface extérieure cylindrique, logé à faible jeu dans le logement cylindrique (5) et présentant un conduit interne (11) terminé par au moins deux débouchés (12, 13) dont au moins un (12) est situé sur la surface extérieure cylindrique, l'organe d'obturation (10, 10a) étant mobile en pivotement sur au moins un quart de tour autour de l'axe (6) de la surface cylindrique entre une première position où au moins un débouché (12, 13) de la surface cylindrique de l'organe d'obturation est en face de l'orifice interne (8, 9) situé sur la surface cylindrique (5) du corps (1) et une seconde position où ce débouché est décalé angulairement par rapport à cet orifice,
- des moyens d'étanchéité prévus entre la surface cylindrique du tournant (10, 10a) et la surface cylindrique du logement (5), comprenant un joint d'étanchéité (18) en forme d'anneau logé dans une gorge (19) de la surface cylindrique du logement, dont le tracé est fermé autour de l'axe (6) de cette surface,
caractérisé en ce que, dans la seconde position du tournant, le joint (18) définit une barrière continue entre l'un des orifices (8, 9) situé sur la surface cylindrique (5) du logement et le conduit interne (11) du tournant (10, 10a) au niveau des surfaces cylindriques du logement et du tournant.

2. Robinet selon la revendication 1, caractérisé en ce que la section de la gorge (19) est en U dont l'une des ailes (20) est formée par un épaulement de la surface cylindrique du logement (5) et dont l'autre aile (21) est formée par la surface terminale, de tracé conjugué à celui de l'épaulement, d'une chemise (22) rapportée dans ce logement, l'organe d'obturation (10a) formant l'un des éléments vis/écrou d'un boulon (10a, 27) de serrage de la chemise (22) en direction de l'épaulement (20) de la surface cylindrique du logement (5).

3. Robinet selon la revendication 2, caractérisé en ce que, l'organe d'obturation (10a) formant l'écrou du boulon susdit, la vis (27a) est creuse et est logée dans un autre débouché (11b) du conduit interne ménagé dans l'organe d'obturation (10), ce débouché étant coaxial à l'axe de pivotement (6) de l'organe d'obturation (10a).

4. Robinet selon la revendication 2 ou la revendication 3, caractérisé en ce que le conduit interne (11) de l'organe d'obturation (10a) présente un autre débouché (12, 13) sur sa surface extérieure cylindrique.

5. Robinet selon l'une des revendications 2 à 4, caractérisé en ce que l'organe d'obturation (10a) porte une poignée de manoeuvre (25) en une seule pièce avec lui à son extrémité opposée à celle coopérant avec la vis (27, 27a).

6. Robinet selon l'une des revendications 2 à 5, caractérisé en ce que les éléments vis (27, 27a) / écrou (10a) formant l'organe d'obturation sont collés l'un à l'autre après vissage.
